**Europäisches Patentamt**

**European Patent Office**

**Office européen des brevets**

(19)

(11) Publication number: **0 145 435**
**B1**

# EUROPEAN PATENT SPECIFICATION

(12)

(45) Date of publication of patent specification: **01.03.89**

(21) Application number: **84308389.0**

(22) Date of filing: **04.12.84**

(51) Int. Cl.⁴: **G 01 G 11/00, G 01 N 9/06**

(54) Improved apparatus for measuring varying density of a slurry flowing in a pipeline.

(30) Priority: **14.12.83 US 561724**

(43) Date of publication of application:
**19.06.85 Bulletin 85/25**

(45) Publication of the grant of the patent:
**01.03.89 Bulletin 89/09**

(84) Designated Contracting States:
**AT BE CH DE FR GB IT LI LU NL SE**

(56) References cited:
**GB-A-1 031 156**
**US-A-3 370 471**
**US-A-4 285 239**

(73) Proprietor: **Slurry Technology Limited**
**8375 Sunset Road**
**Minneapolis Minnesota 55432 (US)**

(72) Inventor: **Heine, Otto R.**
**13372 Calle Colina**
**Poway 92064 California (US)**
Inventor: **Riede, Peter M.**
**8257 Via Mallorca**
**La Jolla 92037 California (US)**

(74) Representative: **Enskat, Michael Antony Frank
et al
Saunders & Dolleymore 9, Rickmansworth Road
Watford Hertfordshire WD1 7HE (GB)**

Courier Press, Leamington Spa, England.

EP 0 145 435 B1

## Description

The present invention is directed to an improved apparatus for accurately measuring the density of a fluid flowing through a pipeline. More particularly, the present invention is directed to an apparatus which has an improved construction and hydrostatic bearings for measuring the varying density of a slurry flowing through a pipeline.

Pipelines for transporting slurries of coal and other minerals have been known for a long time. In order to determine the amount of coal (or other mineral) transported through the pipeline, it has been customary in the prior art to measure the density of the coal or mineral slurry flowing through a predetermined portion of the pipeline. As is known, the density of the slurry usually varies in time. The amount of coal or mineral transported in the pipeline is usually calculated from the density versus time function which must be known as a result of continuous measurements.

Devices used in the prior art for measuring the density of the coal or mineral slurry include nuclear densitometers, and weight measuring devices. The latter measure the weight of a predetermined section of the pipeline wherethrough the slurry flows. Density of the slurry is then readily calculated from the measured weight.

Another type of fluid densitometer device is disclosed in United States Patent No. 4,285,239. The densitometer of this relatively recent patent employs a substantially horizontally disposed pipe section which is coupled to the pipeline through precisely machined interfacing surfaces adapted to function as hydrostatic bearings. The pipe section is held between two end flanges of the pipeline by a predetermined force attained by precise adjustment of the tension of bolts mounting the pipe section to the flanges of the pipe ends. The pipe section is surrounded by a suitable liquid tight envelope, such as a bellows.

During operation of the slurry densitometer disclosed in United States Patent No. 4,285,239, liquid, usually water, is pumped under pressure to the interfacing bearing surfaces. When the force generated on the interfacing surfaces by the pressure of the pumped liquid equals the predetermined mechanical force holding together the interfacing surfaces, a hydrostatic bearing is created. Liquid flows out of the hydrostatic bearings into the interior of the pipeline, and also to the exterior, wherein it is collected in the bellows. Because the hydrostatic bearings "suspend" the pipe section in a substantially frictionless manner, its weight together with the weight of the slurry flowing therein can be accurately measured by load cells, strain gauges or the like.

The above summarised fluid or slurry densitometer of United States Patent No. 4,285,239 functions well. Nevertheless, a need has arisen in the art for a densitometer, which, although still incorporates hydrostatic bearings and provides their advantages, has a relatively simplified and less expensive construction, minimises outflow or loss of the hydrostatic liquid from the bearing surfaces, and therefore requires less pump power to operate.

According to the present invention there is provided a device according to claim 1 with a generic term according to United States Patent No. 4,285,239.

Densitometer apparatus embodying the present invention will now be described, by way of example, with reference to the accompanying diagrammatic drawings, in which:

Figure 1 is a partial cross-sectional view of a first embodiment of a densitometer;

Figure 2 is a partial cross-sectional view of a second embodiment of a densitometer;

Figure 3 is an enlarged view of an area shown on Figure 1;

Figure 4 is a graph showing pressure distribution in a hydrostatic bearing of the densitometer, the graph being keyed to the enlarged view of Figure 3;

Figure 5 is another cross-sectional view of the first preferred embodiment of the densitometer, the cross-section being taken on lines 5,5 of Figure 1;

Figure 6 is still another cross-sectional view of the first preferred embodiment of the densitometer, the cross-section being taken on lines 6,6 of Figure 1;

Figure 7 is an enlarged plan view showing a displacement or position sensor incorporated into the densitometer;

Figure 8 is an enlarged cross-sectional view showing tension rods incorporated into the densitometer;

Figure 9 is a partially exploded perspective view of the first and second preferred embodiment of the densitometer; and

Figure 10 is a perspective view of the first and second preferred embodiments of the densitometer.

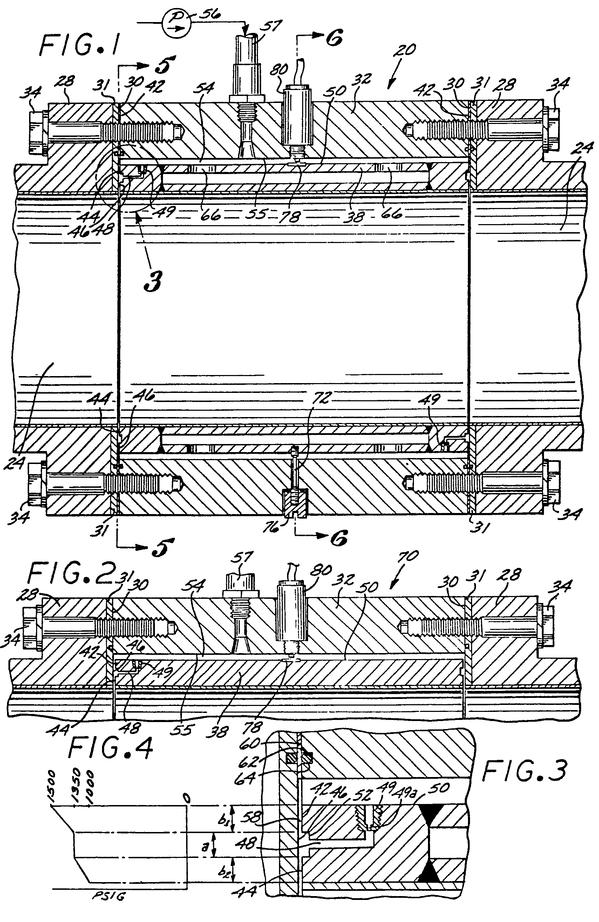

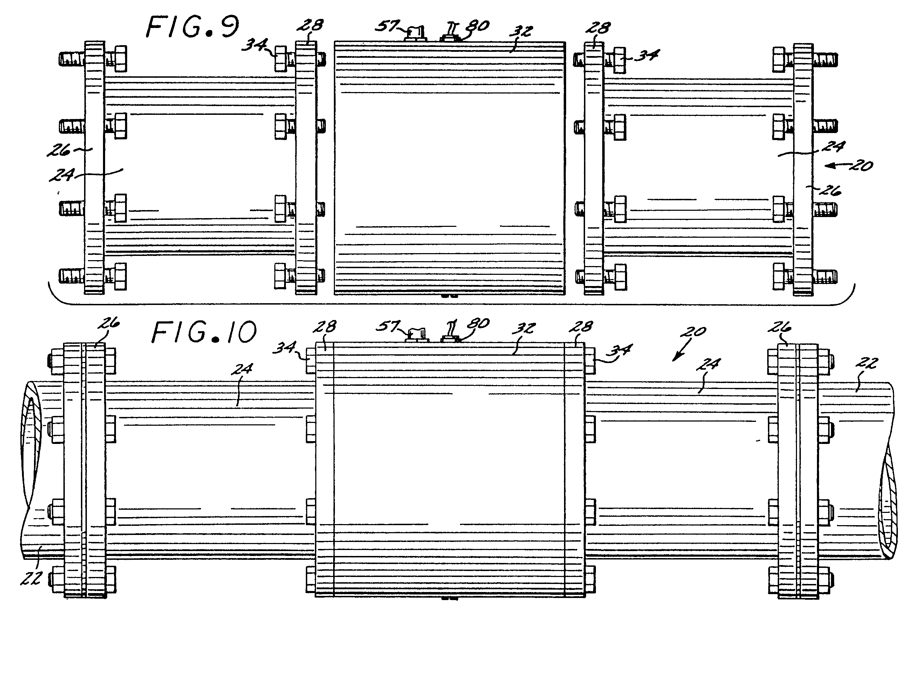

Referring now to the drawing Figures, and particularly to Figures 1, 9 and 10, a first preferred embodiment 20 of the densitometer of the present invention is disclosed. It is noted at the outset that the desitometer of the present invention is in many respects similar in construction, operation and utility to the densitometer disclosed in United States Patent No. 4,285,239. For this reason the densitometer of the present invention is described in detail in its novel aspects. However, for general background and for general description of the operation of the hydrostatic bearings employed in the densitometer of the present invention, reference is made to United States Patent No. 4,285,239.

Thus, the densitometer of the present invention is adapted for continuously or intermittently measuring the density of a fluid flowing in a pipeline. The fluid may be gas or liquid, and the stream of fluid may carry suspended solid particles. As is known, measurement of the density of slurries of coal or other minerals has great practical importance, because it is customary to calculate the amount of coal or mineral transported in a slurry pipeline from the measured densities. Furthermore, the liquid medium transporting the slurries is usually water, although on occasions hydrocarbon liquids are used to transport coal.

The foregoing comprise a summary of the environment in which the present invention is most frequently used. However, the invention is neither limited by the nature of the fluid transported in the pipeline nor by the presence or nature of the solid particles suspended in the fluid, nor by the dimensions of the pipeline. Nevertheless, it is noted that coal or mineral slurry transporting pipelines are usually two to twenty-four inches in diameter. In the ensuing description, the pipeline is usually referred to as a slurry transport pipeline or pipe 22, and the liquid medium is described as water with the understanding that these references are intended to serve as examples rather than limitations.

Referring now again to Figures 1, 9 and 10, the first preferred embodiment 20 of the densitometer of the present invention is shown coupled to a slurry transport pipe 22. The densitometer 20 includes two intermediate pipe pieces 24, each of which has one flanged end 26 which is conventionally mounted to the pipeline. Thus, in effect, the densitometer 20 is inserted into the pipeline 22.

Second ends 28 of the intermediate pipe pieces 24 incorporate flat, precisely machined surfaces 30 disposed normally to the longitudinal axis of the pipeline 22. The flat surfaces 30 are disposed on flange type enlargements of the ends 28 of the intermediate pieces 24 and are designed to interface with the densitometer 20 and to function as hydrostatic bearings. For this reason, the flat surfaces 30 include a cladding 31 of a higher grade steel than the ordinary carbon steel of the transport pipe 22. Preferably a 0.250" (6.35 mm) thick SS-304 steel cladding 31, shown on Figure 1, is incorporated in the first preferred embodiment 20.

A first or exterior pipe section 32 of the densitometer 20 is fixedly mounted between the intermediate pipe pieces 24. This is accomplished by driving threaded bolts 34 into axially disposed internal bores provided in the first pipe section 32.

As is shown on Figure 1, internal diameter of the first pipe section 32 is larger than the internal diameter of the intermediate pipe pieces 24. Except through the hereinafter described hydrostatic bearings, the first or exterior pipe section 32 is not in fluid communication with the intermediate pipe pieces 24 or with the transport pipe 22.

A second, or centre pipe section 38 is disposed within the interior of the first pipe section 32. The second or centre pipe section 32 has an internal diameter which is substantially equal to the internal diameter of the intermediate pipe pieces 24. Preferably, as in the herein shown embodiment, the internal diameter of the intermediate pipe pieces 24 is the same as that of the transport pipe 24. The second, or centre pipe section 38 is horizontally disposed, substantially concentrically with the first pipe section 32, and in substantial alignment with the interior transport cavity 40 of the intermediate pipe pieces 24. In effect, the slurry (not shown) transported in the pipe 22 flows through the second or centre pipe section 38.

As is further shown on Figures 1, 3 and 5, ends 42 of the second or centre pipe section 38 are machined to form hydrostatic bearing surfaces 44 which interface with the precision machined complementary surfaces 46 provided on the ends 28 of the intermediate pipe pieces 24. The entire second pipe section 38 is preferably made of stainless steel, such as SS-304 steel. Ducts 48 are incorporated in the second or centre pipe section 38 to lead from its outer periphery 50 to the bearing surfaces 44.

The hydrostatic bearing surfaces 44 of the second pipe section 38 incorporate a plurality of indentations or pockets 52. This is standard in the construction of hydrostatic bearings and is described in more detail in the specification of United States Patent No. 4,285,239. As is further known in the arts relating to hydrostatic bearings, at least one duct 48, including a nozzle 49 having a precision orifice 49a leads to each indentation or pocket 52. The pockets 52 and the nozzles 49, the precision orifices 49a and the ducts 48 are shown on Figures 1, 2, 3 and 5.

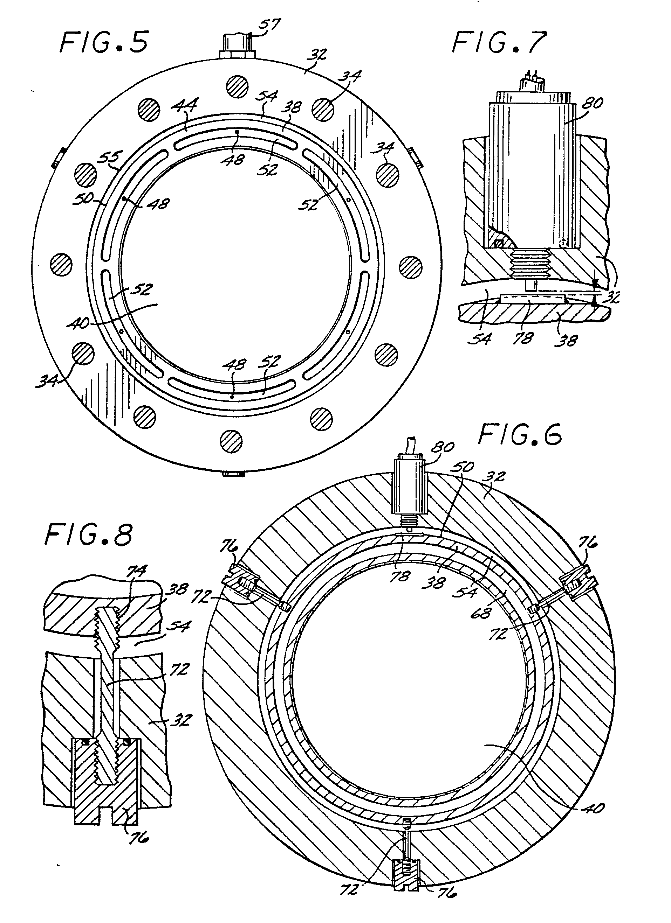

Referring now principally to Figures 1 and 5, a chamber 54 is shown disposed between the outer periphery 50 of the second pipe section 38, and the interior surface 55 of the fixedly mounted first pipe section 32. It is an important feature of the present invention that a hydrostatic fluid (not shown) is pumped by a suitable pump into the chamber 54 at a pressure which is higher than the pressure of the fluid or slurry (not shown) flowing in the transport pipe 22.

The hydrostatic fluid (not shown) is preferably the same as the fluid medium of the slurry (not shown); in case of aqueous slurries the hydrostatic fluid is water. The pump is indicated only schematically on Figure 1, and bears the reference numeral 56. Only a single inlet port 57 is necessary in the first pipe section 32 to conduct the hydrostatic fluid (not shown) into the chamber 54. In the first preferred embodiment of the present invention, the first pipe section 32 and the second pipe section 38 are of equal length. Gaps 58, which are necessary for the operation of the hydrostatic bearings, are maintained between the complementary bearing surfaces 44 and 46 by shims 60 placed between the first pipe section 32 and the intermediate pipe pieces 24. In the herein described first preferred embodiment 20, the shims 60 are approximately 0.0005" (0.0127 mm) thick. Thus, in the first preferred embodiment 20, the hydrostatic bearing surfaces 44 and 46 are separated from one another by a permanent gap 58 of approximately 0.0005" (0.0127 mm) thickness.

Generally speaking, the shims 60, and therefore the gaps 58, are in the order of approximately 0.0003" to 0.0007" (0.0076 to 0.0178 mm) within the scope of the present invention.

For operation, the densitometer 20 of the present invention is carefully levelled so that the second or centre pipe section 38 occupies a horizontal position. Hydrostatic fluid, usually water (not shown), is pumped into the chamber 54. From the chamber 54 the water passes through the ducts 48 and through the gaps 58 to create hydrostatic bearings between the complementary surfaces 44 and 46. Distribution of hydrostatic fluid (water) pressure in the bearings is shown on the graph of Figure 4 for an example where the water pressure in the slurry flow (not shown) is 1000 PSI (6.89 MPa) and the pump 56 maintains 1500 PSI (10.34 MPa) pressure in the chamber 54. O-rings or like seals 62 are incorporated in seal glands 64 to seal the first pipe section 32 to the intermediate pipe pieces and to prevent leakage of pressurized fluid to the exterior.

The hydrostatic bearings enable the second or centre pipe section 38 to move in a substantially frictionless manner in any direction normal to the longitudinal axis of the pipe section 38. This, of course, means, that the centre pipe section 38 moves substantially without friction in the direction of the earth's gravitational field.

Thus, the second pipe section "floats" in chamber 54. The second or centre pipe section 38, is however, unable to move freely in axial direction in the chamber 54. This is because when the gap 58 is narrowed at either end of the second pipe section 38, then the fluid pressure increases significantly in the "narrowing" hydrostatic bearing while pressure decreases in the "widening" bearing. As a consequence, the second or centre pipe section 38 is maintained in a fixed axially centred position in the chamber 54.

Because the centre pipe section 38 is capable of frictionless movement in the chamber 54 in the direction of the earth's gravitational field, weight of this "floating" centre section 38, including weight of the slurry (not shown) contained therein, can be measured accurately, as is described below.

Important dimensions of an exemplary densitometer constructed in accordance with the first preferred embodiment of the present invention are as follows. The first pipe section 32 is 12" (304.8 mm) long, and the second or centre pipe section is of equal length therewith. External diameter of the first pipe section 32 is 18" (457.2 mm), and its internal diameter is 14.25" (361.95 mm). Each intermediate pipe piece 24 is 12" (304.8 mm) long.

External diameter of the second or centre pipe section is 14" (355.6 mm), and its internal diameter is 12" (304.8 mm). Consequently, the chamber or substantially ring-shaped space 54 which is filled with hydrostatic fluid under pressure, has a nominal width of 0.125" (3.175 mm).

Walls of the second or centre pipe section 38 may be hollow, as shown on Figure 1, in order to save weight and materials. Holes 66 are provided in the centre section 38 to permit the hydrostatic fluid (not shown) to enter the hollow interior 68. The hollow centre pipe section 38 having the above noted exemplary dimensions weighs approximately 75 lb (32.02 kg). A centre pipe section 38 having hollow walls is incorporated in the densitometer of the present invention primarily for applications where the pressure of the slurry in the pipeline is low, up to approximately 220 PSI (1.38 MPa).

Referring now to Figure 2, a second preferred embodiment 70 of the densitometer of the present invention is disclosed. The second preferred embodiment 70 differs from the first preferred embodiment 20 in that the "floating" second or centre pipe section 38 is solid, rather than hollow. Moreover, no shims are disposed between the first pipe section 32 and the intermediate pipe pieces 24. As in the first preferred embodiment, the second pipe section 38 is still equal in length with the first pipe section 32. Therefore, when the densitometer of the second preferred embodiment 70 is not in operation, there is no gap between the complementary bearing surfaces 44 and 46 of the intermediate pipe pieces 24 and of the second or centre pipe section 38, respectively.

However, when the densitometer 70 is in operation with a significant pressure differential between the hydrostatic fluid (not shown) in the chamber 54 and the fluid (not shown) transported in the pipe 22, then a significant, axial compressive force acts on the "floating" second or centre pipe section 38. For example, when the dimensions of the bearing surface 44 are as follows: (with particular reference to Figure 3) $b_1$=0.292" (7.417 mm), a=0.292" (7.417 mm) and $b_2$=0.292" (7.417 mm), the pressure of the hydrostatic fluid in chamber 54 is maintained by the pump 56 at $P_0$ (PSI), pressure in the slurry flow (not shown) is $P_2$ (PSI), and the pressure in the indentation or pocket 52 is maintained at $P_1$ (PSI) by appropriate design and selection of the precision orifice 49a, then the compressive axial force ($F_{axial_1}$), acting on the centre pipe section 38 is calculated by Equation 1.

$$F_{axial_1}=\frac{P_0+P_1}{2}(14^2-13.416^2)\pi/4+$$

$$+P_1(13.416^2-12.832^2)\pi/4+$$

$$+\frac{P_1+P_2}{2}(12.832^2-12.25^2)\pi/4$$

Equation 1

When
$P_0$=1500 PSI (10.3 MPa)
$P_1$=1350 PSI (9.3 MPa)
$P_2$=1000 PSI (6.9 MPa)
Then
$F_{axial_1}$=51000 lb (231330 N)

Deformation ($\Delta l_1$) of the solid "floating" second or centre pipe section 38 under this compressive force is calculated as shown in Equations 2 and 3.

$$K_1 = \frac{AE}{I} \left( \frac{14^2 - 12.25^2 \pi/4 \times 29 \times 10^6}{12} \right)$$

$$= 87.19 \times 10^6 \text{ lb/inch } (1.5269 \cdot 10^{10} \text{ N/m})$$

Equation 2

Where $K_1$ is the spring constant, A is area (square inch), E is Young's modulus and I is the length of the centre section 38.

$$\Delta l_1 = \frac{F}{K_1} = \frac{51000}{87.19 \times 10^6} = 0.0006'' \ (0.01524 \text{ mm})$$

Equation 3

The hydrostatic pressure in the bearings also causes a tension force to act on the first pipe section 32. This force ($F_2$) and elongation ($\Delta l_2$) caused thereby, are approximated as follows with reference to the relevant dimensions of the first pipe section 32.

$$F_{axial_2} = P_2 \ (12^2 \cdot \pi/4) +$$
$$F_{axial_1} = 164000 \text{ lb } (743890 \text{ N})$$

Equation 4

$$K_2 = \frac{AE}{I} = \frac{(19^2 - 14.25^2) \pi/4 \times 29 \times 10^6}{12}$$

$$= 230 \times 106 \text{ lb/inch } (4.0279 \times 10^{10} \text{ N/m})$$

Equation 5

$$\Delta l_2 = \frac{164000}{230 \times 10^6} = 0.0007'' \ (0.018 \text{ mm})$$

Equation 6

Thus under the above noted circumstances a gap 58 is created on each side of the second or centre pipe section 38 by the hydrostatic pressure acting in the bearings.

The width (w) of the gap 58 is calculated by Equation 7.

$$W = \frac{\Delta l_1 + \Delta l_2}{2} = 0.00065'' \ (0.0165 \text{ mm})$$

Equation 7

The gap 58 of approximately 0.00065" (0.0165 mm) is well suited for operation of the hydrostatic bearings. Generally speaking, a gap width of at least 0.0003" (0.0076 mm) is necessary for the operation of the hydrostatic bearings utilising a water as a fluid.

In the above described first preferred embodiment, a much smaller gap is created by the hydrostatic pressure than in the second preferred embodiment because the second or centre pipe section 38 is hollow, and because the operative pressures are usually much lower in the application of the first embodiment: for example $P_2$ usually does not exceed 200 PSI (1.379 MPa). Therefore, only a much smaller compressive force acts on the centre pipe section 38, and only a much smaller tension force acts on the first pipe section 32.

Significant advantages of the herein described densitometer 20 and 70 of the present invention include the following. Construction of the densitometer, and particularly of the hydrostatic bearing surfaces 44 and 46 is relatively simple. Except for the identation of pockets 52, the surfaces 44 and 46 are simply machined flat.

Furthermore, the densitometer of the present invention requires less pump power to operate than the densitometer described in United States Patent No. 4,285,239. This is apparent from the fact that flow of hydrostatic fluid occurs only inwardly, toward the interior of the transport pipe 22. There is no loss of hydrostatic fluid outwardly, towards the exterior of the first pipe section 32 as in the prior art.

Referring now to Figures 1, 2, 6 and 7 of the drawings, the manner of measuring the weight of the "floating" second or centre pipe section 38 and mounting of the same in the interior of the enveloping first pipe section 32 is disclosed. Generally speaking, the centre pipe section 38 may be mounted on one or several load cells or strain gauges (not shown). Requirements in this regard are only that the load cells or strain gauges must not permit excessive displacement of the centre pipe section 38. In other words, the centre pipe section 38 must be maintained in operative position and must not come into contact with the interior walls of the enveloping first pipe section 32. Output of the load cells or strain gauges may be recorded continuously, and may be used to compute the density of the slurry (not shown) flowing in the pipeline. The load cells or strain gauges (not shown) must, of course, be protected from the hydrostatic fluid (not shown) which surrounds the "floating" centre pipe section 38.

A preferred alternative to the use of load cells or strain gauges, is however, to mount the centre pipe section 38 on a plurality of preloaded tension rods 72 or tension wires (not shown). Preferably, three preloaded tension rods 72 are used which are equally spaced (at 120° apart from one another) about the periphery of the centre pipe section 38, as is best shown in Figure 6. Each tension rod 72 engages a threaded bore 74 provided in the centre pipe section 38, and is attached to the enveloping first pipe section 32 by a suitable nut 76, as is shown on Figure 6 and 8.

The tension rods 72 have known strain characteristics (spring constants). It can be shown by relatively simple calculations that when, as in the herein described preferred embodiments, there are three equally spaced tension rods 72 having identical spring constants (K), the actual spring constant acting in the vertical direction (K$_v$) (or any direction for that matter) is double of the spring constant (K) of the individual tension rods. (Equation 8).

$$K_v = 2K \qquad \text{Equation 8}$$

Advantages of this arrangement are that it is not necessary for any of the tension rods to be aligned with the vertical direction, and only one of the three equal tension rods needs to be adjusted or tightened thereby automatically creating equal tension force on all three tension rods.

Since the spring constant (K) of the tension rods 72 is known, movement or displacement of the centre pipe section 38 in the gravity vertical direction is measured by a suitable instrument, such as a displacement or position monitoring device operating on optical principles, or on the principle of capacitance varying as a function of distance. Such position or displacement measuring devices are well known in the art and are commercially available. "Fotonic Sensors" of KD 300 series, and the "Accumeasure System 1000" of Mechanical Technology Incorporated of Latham, New York serve as examples.

Thus, in the preferred embodiments 20 and 70 of the present invention, a small mirror 78 is embedded in the outer surface 50 of the centre pipe section 38. A fibre optics containing sensor 80 is mounted into the first pipe section 32. Operation of the sensor and of associated electronics need not be described here, since such sensors and electronics are well known. It is sufficient to note that a light is cast on the mirror 78, and the reflected light triggers a signal in the sensor which is indicative of the position of the mirror 78.

The above noted "Fotonic Sensors" of Mechanical Technology Incorporated (and like fibre optics containing displacement sensors known in the art) are accurate to the 10$^{-6}$ inch (25.4×10$^{-6}$ mm) magnitude.

The weight of the second or centre pipe section 38 and of the slurry momentarily contained therein, is readily calculated from the accurately measured displacement of the centre pipe section 38, in a manner well known in the art. In fact, a read-out or recorder device (not shown) used in conjunction with the densitometer of the present invention may include the necessary computing means to perform the calculations, and may directly display and record, the calculated weights, and also the slurry densities calculated from the weights.

In a modification or alternative embodiment of the slurry densitometer of the present invention, the intermediate pipe pieces may be omitted. In this embodiment, the corresponding ends of the transport pipe have fixed direct connection to the first pipe section 32, and also have precision machined surfaces to form the hydrostatic bearings.

## Claims

1. A device for measuring the weight of a pipe section having fluid or slurry flowing therethrough, the device comprising a pipe section (38) disposed between two spaced facing ends of a fluid or slurry transport pipe (22) and defining hydrostatic bearings therewith to enable the pipe section (38) to move substantially without friction relative to the pipe (22) in the direction of the earth's gravitational field; the pipe section (38) being in fluid communication with the pipe (22) so that fluid or slurry can flow through the pipe section (38), first means (56) for supplying hydrostatic fluid under pressure to said hydrostatic bearings and transducer means (80) for sensing a physical parameter from which the weight of the pipe section (38) and of the fluid or slurry momentarily contained therein may be calculated, characterised by a substantially horizontally disposed outer pipe section (32) coupled to the fluid or slurry pipe (22) to concentrically encircle the first mentioned pipe section (38) so that it becomes an inner pipe section (38), a chamber (54) defined between the outer surface of the inner pipe section (38) and the inner surface of the outer pipe section (32) whereby the first means (56) comprises second means (52, 49, 49a and 48) in the inner pipe section (38) for permitting passage under pressure of hydrostatic fluid from the chamber (54) to said hydrostatic bearings.

2. A device according to Claim 1 characterised in that the first means (56) are adapted to supply the hydrostatic fluid into the chamber (54) at a pressure which is higher than the pressure of the fluid or slurry flowing through the fluid transport pipe (22).

3. A device according to Claim 1 or to Claim 2 characterised in that each surface of the inner pipe section (38) which faces an end of the pipe section (22) is machined and defines at least one pocket (52), and in that the second means (52, 49, 49a and 48) includes a duct (48) leading to each of the pockets (52) for conducting flow of hydrostatic fluid through the duct (48) to the respective pocket (52).

4. A device according to any preceding claim characterised in that each surface of the inner pipe section (38) which faces an end of the pipe section (22) is machined and defines a plurality of pockets, and in that the second means (52, 49, 49a, 48) includes a plurality of ducts (48), each duct (48) leading to one pocket (52) for conducting the flow of hydrostatic fluid through the duct (48) to the respective pocket (52).

5. A device according to any preceding Claim characterised in that the first means (56) includes pump means for supplying hydrostatic fluid under pressure to the chamber (54), and in that at least one inlet duct means (57) disposed in the outer pipe section (32) for permitting flow of hydrostatic fluid from the pump means (56) to the chamber (54).

6. A device according to Claim 5 characterised in that the inlet duct means (57) includes only a single inlet duct into the first pipe section.

7. A device according to any preceding claim characterised in that the outer pipe section (32) includes a plurality of internally threaded bores, in that the fluid or slurry transport pipe (22) includes a flange (28) substantially at each of its ends adjacent to the outer pipe section (32), and in that the outer pipe section (32) is stationarily mounted to the flanges (28) of the fluid or slurry transport pipe (22) with a plurality of bolts (34) engaging the threaded bores.

8. A device according to any preceding claim characterised by third means for permitting limited movement of the inner pipe section (38) in the direction of the earth's gravitational field in response to varying weight of the fluid or slurry momentarily contained in the inner pipe section (38), and in that the sensing means (80) comprises means for sensing location of the inner pipe section in the direction of the earth's gravitational field.

9. A device according to Claim 1 characterised by two intermediate pipe pieces (24), each intermediate pipe piece (24) being rigidly secured to the fluid or slurry transport pipe (22), and in that the machined surfaces in the pipeline (22) which interface the complementary machined surfaces in the inner pipe section (38) are formed in the respective intermediate pipe pieces (24).

10. A device according to Claim 1 or to Claim 9 characterised by spring means (72) for limiting movement of the inner pipe section (38) in a direction parallel with the earth's gravitational field and for rendering said movement proportional to the gravitational force acting on the inner pipe section (38) and on the slurry contained therein.

11. A device according to Claim 10 characterised in that the sensing means senses the position of the inner pipe section (38) in the direction parallel with the earth's gravitational field.

12. A device according to Claim 10 or to Claim 11 characterised in that the spring means comprises three tension rods (72) spaced equally about the circumference of the inner pipe section, the tension rods (72) having substantially identical spring constants.

13. A device according to any preceding claim characterised in that the inner and outer pipe sections (32, 38) are of equal length, and in that a shim (60) is stationarily disposed between ends of the outer pipe section and adjacent ends of the fluid or slurry transport pipe (22).

14. A device according to Claim 13 characterised in that the shims (60) are approximately 0.0003" to 0.0007" (0.0076 to 0.0178 mm) thick.

15. A device according to any preceding claim characterised in that the sensing means (80) comprises a mirror (78) fixedly attached to the inner pipe section (38), means for casting light on the mirror (78), and transducer means responsive to light reflected from the mirror (78) for transmitting a signal indicative of the position of the mirror (78).

16. A device according to any preceding claim characterised in that the sensing means comprises a proximity sensor adapted for measuring varying capacitance of a condenser as a function of distance.

17. A device according to any preceding claim characterised in that the inner and outer pipe sections (32, 38) are of equal length, and in that the hydrostatic fluid is supplied by the first means (56) at a sufficiently high pressure into the chamber (56) to cause a pressure differential between the pressure of the hydrostatic fluid transport pipe (22), which differential is sufficient to axially compress the inner pipe section to create the small gaps of the hydrostatic bearings.

18. A device according to Claim 17 characterised in that the pressure applied to the inner pipe section (38) is sufficient to axially compress the inner pipe section by at least 0.0003" (0.0076 mm).

19. A device according to Claim 17 characterised in that the hydrostatic fluid is supplied by the first or pump means to the chamber at least at 1500 PSI (10.34 MPa) pressure.

20. A device according to any one of claims 1 to 8 or 10 to 19 characterised by two intermediate pipe pieces (24), each intermediate pipe piece (24) being fixedly coupled to the fluid or slurry transport pipe (22), and incorporating the pipe ends which have the machined surfaces complementary to machined surfaces provided at each end of the inner pipe section (38).

**Patentansprüche**

1. Vorrichtung zum Messen des Gewichts eines Rohrabschnittes, durch den eine Flüssigkeit oder eine pumpfähige Masse hindurchfließt, wobei die Vorrichtung einen Rohrabschnitt (38) aufweist, der zwischen zwei räumlich voneinander getrennten Stirnenden eines Flüssigkeit- oder Schlammtransportrohrs (22) angeordnet ist und mit diesen hydrostatische Lager begrenzt, um es dem Rohrabschnitt (38) zu ermöglichen, sich im wesentlichen ohne Reibung im Bezug zu dem Rohr (22) in Richtung des Erdgravitationsfeld zu bewegen; wobei der Rohrabschnitt (38) in beweglicher flüssiger verbindung mit dem Rohr (22) steht, so daß Flüssigkeit oder eine pumpfähige Masse durch den Rohrabschnitt (38) hindurchfließen kann, mit ersten Mitteln (56) um eine hydrostatische Flüssigkeit unter Druck den besagten hydrostatischen Lagern zuzuführen und mit Meßwerterfassungsmitteln (80), um einen physikalischen Kennwert zu erfassen, aus dem das Gewicht des Rohrabschnittes (38) und der in diesem gerade vorhandenen Flüssigkeit oder pumpfähigen Masse berechnet werden kann, dadurch gekennzeichnet, daß ein im wesentlichen horizontal angeordneter äußerer Rohrabschnitt (32) an das Flüssigkeits- oder Schlammrohr (22) angekoppelt ist, um den zuerst erwähnten Rohrabschnitt (38) konzentrisch so zu umfassen, daß er in einen inneren Rohrschnitt (38) und eine Kammer (54) aufgeteilt wird, die von der äußeren Oberfläche des inneren Rohrabschnittes (38) und der inneren Oberfläche des äußeren Rohrabschnittes (32) begrenzt wird, wobei die ersten Mittel (56) zweite Mittel (52, 49, 49a und 48) in dem inneren Rohrabschnitt (38) umfassen, um das Strömen von hydrostatischer Flüssigkeit von der Kammer (54) zu den besagten hydrostatischen Lagern zu gestatten.

2. Vorrichtung nach Anspruch 1, dadurch gekennzeichnet, daß die ersten Mittel (56) geeignet sind, um die hydrostatische Flüssigkeit mit einem Druck in die Kammer (54) zu führen, der höher als der Druck der Flüssigkeit oder der pumpfähigen Masse ist, die durch das Flüssigkeitstransportrohr (22) fließt.

3. Vorrichtung nach Anspruch 1 oder Anspruch 2, dadurch gekennzeichnet, daß jede Oberfläche des inneren Rohrabschnittes (38), die ein Ende des Rohrabschnittes (22) begrenzt, bearbeitet ist sowie zumindest eine Tasche (52) begrenzt und daß die zweiten Mittel (52, 49, 49a und 48) eine Röhrenleitung (48) umfassen, die zu jeder der Taschen (52) führt, um eine Strömung der hydrostatischen Flüssigkeit durch die Röhrenleitung (48) zu der entsprechenden Tasche (52) zu führen.

4. Vorrichtung nach einem der vorstehenden Ansprüche, dadurch gekennzeichnet, daß jede Oberfläche des inneren Rohrabschnittes (38), die ein Ende des Rohrabschnittes (22) begrenzt, bearbeitet ist sowie eine Vielzahl von Taschen begrenzt und daß die zweiten Mittel (52, 49, 49a, 48) eine Vielzahl von Röhrenleitungen (48) umfassen, wobei jede Röhrenleitung (48) zu einer Tasche (52) führt, um eine Strömung der hydrostatischen Flüssigkeit durch die Röhrenleitung (48) zu der entsprechenden Tasche (52) zu führen.

5. Vorrichtung nach einem der vorstehenden Ansprüche, dadurch gekennzeichnet, daß die ersten Mittel (56) Pumpmittel umfassen, um hydrostatische Flüssigkeit unter Druck der Kammer (54) zuzuführen, und daß wenigstens ein Einlaßröhrenleitungsmittel (57) in dem äußeren Rohrabschnitt (32) angeordnet ist, um eine Strömung der hydrostatischen Flüssigkeit von den Pumpmitteln (56) zu der Kammer (54) zu gestatten.

6. Vorrichtung nach Anspruch 5, dadurch gekennzeichnet, daß das Einlaßröhrenleitungsmittel (57) nur eine einzige Einlaßröhrenleitung in den ersten Rohrabschnitt umfaßt.

7. Vorrichtung nach einem der vorstehenden Ansprüche, dadurch gekennzeichnet, daß der äußere Rohrabschnitt (32) eine Vielzahl von Bohrungen mit Innengewinde aufweist, daß das Flüssigkeits- oder Schlammtransportrohr (22) einen Flansch (28) im wesentlichen an jedem seiner an den äußeren Rohrabschnitt (32) angrenzenden Enden beinhaltet, und daß der äußere Rohrabschnitt (32) ortsfest an den Flanschen (28) des Flüssigkeits- oder Schlammtransportrohrs (22) mit einer Vielzahl von Bolzen (34) befestigt ist, die in die Gewindebohrungen eingreifen.

8. Vorrichtung nach einem der vorstehenden Ansprüche, gekennzeichnet durch dritte Mittel, um eine begrenzte Bewegung des inneren Rohrabschnittes (38) in der Richtung des Erdgravitationsfeldes als Reaktion zu dem sich verändernden Gewicht der Flüssigkeit oder der pumpfähigen Masse zu erlauben, die gerade in dem inneren Rohrabschnitt (38) enthalten ist, und durch Erfassungsmittel (80), die Mittel aufweisen, um die Position des inneren Rohrabschnittes in Richtung des Erdgravitationsfeld zu erfassen.

9. Vorrichtung nach Anspruch 1, gekennzeichnet durch zwei Zwischenrohrstücke (24), wobei jedes Zwischenrohrstück (24) fest mit dem Flüssigkeits- oder Schlammtransportrohr (22) verbunden ist, und daß die bearbeiteten Oberflächen in dem Rohr (22), die mit den entsprechenden bearbeiteten Oberflächen in dem inneren Rohrabschnitt (38) zusammenwirken, in den jeweiligen Zwischenrohrstücken (24) gebildet sind.

10. Vorrichtung nach Anspruch 1 oder Anspruch 9, gekennzeichnet durch Federmittel (72), um die Bewegung des inneren Rohrabschnittes (38) in einer zum Erdgravitationsfeld parallelen Richtung zu begrenzen und um die besagte Bewegung proportional zur Gravitationskraft zu machen, die auf den inneren Rohrabschnitt (38) und die darin enthaltene pumpfähige Masse wirkt.

11. Vorrichtung nach Anspruch 10, dadurch gekennzeichnet, daß die Erfassungsmittel die Position des inneren Rohrabschnittes (38) in der zu dem Erdgravitationsfeld parallelen Richtung erfaßt.

12. Vorrichtung nach Anspruch 10 oder nach Anspruch 11, dadurch gekennzeichnet, daß die Federmittel drei Spannstangen (72) umfassen, die in gleichen Abständen um den Umfang des inneren Rohrabschnittes angeordnet sind, wobei die Spannstangen (72) im wesentlichen gleiche Federkonstanten aufweisen.

13. Vorrichtung nach einem der vorstehenden Ansprüche, dadurch gekennzeichnet, daß die inneren und äußeren Rohrabschnitte (32, 38) von gleicher Länge sind und daß eine Unterlegplatte (60) ortsfest zwischen den Enden des äußeren Rohrabschnittes und angrenzenden Enden des Flüssigkeits- oder Schlammtransportrohres (22) vorgesehen ist.

14. Vorrichtung nach Anspruch 13, dadurch gekennzeichnet, daß die Unterlegplatten (60) ungefähr 0,0003 Zoll bis 0,0007 Zoll (0,0076 bis 0,0178 Millimeter) dick sind.

15. Vorrichtung nach einem der vorstehenden Ansprüche, dadurch gekennzeichnet, daß die Erfassungsmittel (80) einen Spiegel (78) umfassen, der fest an dem inneren Rohrabschnitt (38) befestigt ist, mit Mitteln, um Licht auf den Spiegel (78) zu werfen, und mit Meßwerterfassungsmitteln, die auf von dem Spiegel (78) reflektiertes Licht reagieren, um ein Signal weiterzuleiten, das die Position des Spiegels (78) anzeigt.

16. Vorrichtung nach einem der vorstehenden Ansprüche, dadurch gekennzeichnet, daß die Erfassungsmittel einen Abstandsmeßfühler aufweisen, der eine sich verändernde Kapazität eines Kondensors als eine Funktion der Entfernung erfaßt.

17. Vorrichtung nach einem der vorstehenden Ansprüche, dadurch gekennzeichnet, daß die inneren und äußeren Rohrabschnitte (32, 38) die gleiche Länge aufweisen und daß die hydrostatische Flüssigkeit von den ersten Mitteln (56) mit einem genügend hohen Druck in die Kammer (54) geführt wird, um eine Druckdifferenz zwischen dem Druck der hydrostatischen Flüssigkeit und dem Transportrohr (22) zu bewirken, wobei die Druckdifferenz genügt, um den inneren Rohrabschnitt axial zusammenzudrücken, damit die kleinen Zwischenräume der hydrostatischen Träger erzeugt werden.

18. Vorrichtung nach Anspruch 17, dadurch gekennzeichnet, daß der auf den inneren Rohrabschnitt (38) ausgeübte Druck genügt, um den inneren Rohrabschnitt um wenigstens 0,0003 Zoll (0,0076 Millimeter) axial zusammenzudrücken.

19. Vorrichtung nach Anspruch 17, dadurch gekennzeichnet, daß die hydrostatische Flüssigkeit von den ersten oder den Pumpmitteln der Kammer mit mindestens 1500 englischen Pfund pro Quadratzoll (10,34 Megapascal) zugeführt wird.

20. Vorrichtung nach einem der Ansprüche 1 bis 8 oder 10 bis 19, gekennzeichnet durch zwei Zwischenrohrstücke (24), wobei jedes Zwischenrohrstück (24) fest mit dem Flüssigkeits- oder Schlammtransportrohr (22) verbunden ist und die Rohrenden umfassen, die über die bearbeiteten Oberflächen verfügen, die mit den bearbeiteten Oberflächen zusammenwirken, die an jedem Ende des inneren Rohrabschnittes (38) vorgesehen sind.

**Revendications**

1. Dispositif pour mesurer le poids d'une section de canalisation traversée par un fluide ou une boue, le dispositif comprenant:
— une section de tuyau (38) disposée entre deux extrémités se faisant face d'un tuyau de transport (22) d'un fluide ou de boue et définissant à cette occasion des paliers hydrostatiques pour permettre à la section de tuyau (38) de se déplacer pratiquement sans friction par rapport au tuyau (22) dans la direction du champ gravitationnel terrestre, la section de tuyau (38) étant en communication fluide avec le tuyau (22) de manière telle que du fluide ou de la boue puisse s'écouler au travers de la section de tuyau (38);
— un premier moyen (56) pour fournir un fluide hydrostatique sous pression auxdits paliers hydrostatiques et
— un moyen transducteur (80) pour capter un paramètre physique à partir duquel le poids de la section de tuyau (38) et du fluide ou de la boue qui y est momentanément contenu peuvent être calculés, caractérisé par une section de tuyau (32) extérieur disposée sensiblement horizontalement, couplée au tuyau (22) de fluide ou de boue pour encercler de manière concentrique ladite première section de tuyau (38) de manière telle que celle-ci devienne une section de tuyau (38) intérieure par une chambre (54) définie entre la surface externe de la section de tuyau (38) interne et la surface interne de la section de tuyau (32) extérieur, le premier moyen (56) comprenant un second moyen (52, 49, 49a et 48) dans la section de tuyau (38) intérieur pour permettre le passage sous pression de fluide hydrostatique de la chambre (54) auxdits paliers hydrostatiques.

2. Dispositif selon la revendication 1, caractérisé en ce que les premiers moyens (56) sont adaptés pour alimenter le fluide hydrostatique dans la chambre (54) à une pression qui est plus élevée que la pression du fluide ou de la boue s'écoulant au travers du tuyau (22) de transport de fluide.

3. Dispositif selon la revendication 1 ou la revendication 2, caractérisé en ce que chaque surface de la section de tuyau (38) intérieure qui est en vis-à-vis de l'extrémité de la section de tuyau (22) est usinée et définit au moins un trou borgne (52) et que le second moyen (52, 49, 49a et 48) inclut une conduite (48) menant à chacun des trous (52) pour amener l'écoulement de fluide hydrostatique au travers de la conduite (48) vers le trou respectif (52).

4. Dispositif selon l'une quelconque des revendications précédentes, caractérisé en ce chaque surface de la section de tuyau (38) intérieure qui est en vis-à-vis de l'extrémité de la section de tuyau (22) est usinée et définit une pluralité de trous borgnes et que le second moyen (52, 49, 49a et 48) inclut une pluralité de conduites (48), chaque conduite (48) menant à un trou borgne (52) pour amener l'écoulement de fluide hydrostatique au travers de la conduite (48) vers le trou respectif (52).

5. Dispositif selon l'une quelconque des revendications précédentes caractérisé en ce que le premier moyen (56) inclut un moyen de pompage pour alimenter en fluide hydrostatique sous pression la chambre (54) et au moins un moyen de conduite d'entrée (57) disposé dans la section de tuyau (32) extérieure pour permettre l'écoulement de fluide hydrostatique du moyen de pompage (56) à la chambre (54).

6. Dispositif selon la revendication 5, caractérisé en ce que le moyen de conduite d'entrée (57) inclut seulement une conduite d'entrée unique à l'intérieur de la première section de canalisation.

7. Dispositif selon l'une quelconque des revendications précédentes, caractérisé en ce que la section de tuyau (32) extérieure inclut une pluralité d'alésages filetés intérieurement, que le tuyau (22) de transport de fluide ou de boue inclut une collerette (28) essentiellement à chacune de ses extrémités adjacentes à la section de canalisation (32) extérieure et que la section de canalisation (32) extérieure est montée fixe sur les collerettes du tuyau de transport (22) de fluide ou de boue avec une pluralité de boulons (34) venant en prise dans les alésages filetés.

8. Dispositif selon l'une quelconque des revendications précédentes, caractérisé en ce qu'il comporte un troisième moyen pour permettre le déplacement limité de la section de tuyau (38) intérieur dans la direction du champ gravitationnel terrestre en réponse à une variation de poids du fluide ou de la boue momentanément contenue dans la section de tuyau (38) intérieur et en ce que le moyen de détection (80) comporte un moyen pour détecter la position de la section de tuyau intérieur dans la direction du champ gravitationnel terrestre.

9. Dispositif selon la revendication 1, caractérisé par deux pièces de tuyau (24) intermédiaires, chaque pièce de tuyau (24) intermédiaire étant fixée rigidement au tuyau (22) de transport de fluide ou de boue et en ce que les surfaces usinées dans le tuyau (22) qui viennent en vis-à-vis des surfaces complémentaires usinées dans la section de tuyau (38) intérieur sont formées dans les pièces de tuyau (24) intermédiaires respectives.

10. Dispositif selon la revendication 1 ou la revendication 9, caractérisé en ce qu'il comporte un moyen élastique (72) pour limiter le mouvement de la section de tuyau (38) intérieur dans une direction parallèle au champ gravitationnel terrestre et pour rendre ledit mouvement proportionnel à la force de gravitation agissant sur la section de tuyau (38) intérieur et sur la boue qui y est contenue.

11. Dispositif selon la revendication 10, caractérisé en ce que le moyen de détection détecte la position de la section de tuyau (38) intérieur dans la direction parallèle au champ gravitationnel terrestre.

12. Dispositif selon la revendication 10 ou la revendication 11, caractérisé en ce que le moyen élastique comprend trois tirants d'ancrage (72) répartis également selon la circonférence de la section de tuyau intérieur, les tirants d'ancrage (72) ayant des constantes élastiques substantiellement identiques.

13. Dispositif selon l'une quelconque des revendications précédentes, caractérisé en ce que les sections de tuyau (32, 38) intérieur et extérieur sont de même longueur, et qu'une cale d'épaisseur (60) est montée fixe entre les extrémités de la section de tuyau extérieur et les extrémités adjacentes du tuyau (22) de transport de fluide ou de boue.

14. Dispositif selon la revendication 13, caractérisé en ce que les cales d'épaisseur (60) ont une épaisseur comprise entre 0,0076 et 0,0178 mm.

15. Dispositif selon l'une quelconque des revendications précédentes, caractérisé en ce que le moyen de détection (80) comporte un miroir (78) monté fixe sur la section de tuyau (38) intérieur, un moyen pour projeter de la lumière sur le miroir (78) et un moyen transducteur répondant à la lumière réfléchie du miroir (78) pour transmettre un signal indiquant la position du miroir (78).

16. Dispositif selon l'une quelconque des revendications précédentes, caractérisé en ce que le moyen de détection comporte un capteur de proximité adapté pour mesurer une variation de capacité d'un condensateur comme une fonction de distance.

17. Dispositif selon l'une quelconque des revendications précédentes, caractérisé en ce que les sections de tuyau (32, 38) intérieur et extérieur sont de même longueur et en ce que le fluide hydrostatique est alimenté par le premier moyen (56) à une pression suffisamment élevée dans la chambre (54) pour entrainer un différentiel de pression avec la pression du tuyau (22) de transport du fluide hydrostatique, ledit différentiel étant suffisant pour comprimer axialement la section de tuyau intérieur de manière à créer les petits écartements des paliers hydrostatiques.

18. Dispositif selon la revendication 17, caractérisé en ce que la pression appliquée à la section du tuyau (38) intérieur est suffisante pour comprimer la section de tuyau intérieur de au moins 0,0076 mm.

19. Dispositif selon la revendication 17, caractérisé en ce que le fluide hydrostatique est alimenté par le premier moyen et le moyen de pompage à la chambre à une pression de au moins 10,34 MPa.

20. Dispositif selon l'une quelconque des revendications 1 à 8 ou 10 à 19, caractérisé en ce qu'il comporte deux pièces de tuyau (24) intermédiaires, chaque pièce de tuyau (24) intermédiaire étant couplée de manière fixe au tuyau (22) de transport de fluide ou de boue, et englobant les extrémités de tuyau qui ont les surfaces usinées complémentaires des surfaces usinées ménagées à chaque extrémité de la section de tuyau (38) intérieur.

FIG.1

FIG.2

FIG.4

FIG.3

FIG.5

FIG.7

FIG.8

FIG.6

FIG.9

FIG.10

EP 0 145 435 B1